(19) Europäisches Patentamt
European Patent Office
Office européen des brevets

(11) **EP 4 447 584 A1**

## (12) EUROPEAN PATENT APPLICATION
published in accordance with Art. 153(4) EPC

(43) Date of publication:
**16.10.2024 Bulletin 2024/42**

(21) Application number: **22914964.6**

(22) Date of filing: **28.12.2022**

(51) International Patent Classification (IPC):
**H04W 72/04** (2023.01)

(52) Cooperative Patent Classification (CPC):
**H04L 69/06; H04W 24/02; H04W 72/04;**
**Y02D 30/70**

(86) International application number:
**PCT/CN2022/142983**

(87) International publication number:
**WO 2023/125713 (06.07.2023 Gazette 2023/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **30.12.2021 CN 202111657517**

(71) Applicant: **ZTE Corporation**
**Shenzhen, Guangdong 518057 (CN)**

(72) Inventor: **ZHANG, Bo**
**Shenzhen, Guangdong 518057 (CN)**

(74) Representative: **Osterhoff, Utz**
**Bockermann Ksoll**
**Griepenstroh Osterhoff**
**Patentanwälte**
**Bergstraße 159**
**44791 Bochum (DE)**

## (54) FRAME STRUCTURE ADJUSTING METHOD AND APPARATUS, ELECTRONIC DEVICE AND STORAGE MEDIUM

(57) Embodiments of the present application relate to the technical field of communication, and provide a method and an apparatus for adjusting a frame structure, an electronic device, and a storage medium. The method for adjusting the frame structure includes: obtaining a correlation degree of the frame structure among each of target cells, where the correlation degree of the frame structure includes information representing mutual relation and/or frame structure requirements of each of the target cells; clustering the target cells according to the correlation degree of the frame structure to obtain several cell clusters; and determining a frame structure corresponding to each cell cluster according to uplink load information and downlink load information of the target cells in the cell cluster, to adjust a frame structure of each of the target cells in the cell cluster according to the frame structure corresponding to each cell cluster.

obtaining a correlation degree of the frame structure among each of target cells — 101

clustering the target cells according to the correlation degree of the frame structure to obtain several cell clusters — 102

determining a frame structure corresponding to each cell cluster according to uplink load information and downlink load information of the target cells in the cell cluster, to adjust a frame structure of each of the target cells in the cell cluster according to the frame structure corresponding to each cell cluster — 103

FIG. 1

EP 4 447 584 A1

## Description

## CROSS-REFERENCE TO RELATED APPLICATIONS

This application claims priority to Chinese Patent Application No. 202111657517.4, filed on December 30, 2021, the entire contents of which are incorporated herein by reference.

## TECHNICAL FIELD

Embodiments of the present application relate to the technical field of communication, in particular to a method and an apparatus for adjusting a frame structure, an electronic device, and a storage medium.

## BACKGROUND

In wireless communication system, according to the duplexing mode adopted by the system, the system can be divided into two categories: Frequency Division Duplexing (FDD) and Time Division Duplexing (TDD). The uplink and downlink in the FDD system transmit data based on different frequencies, that is, the uplink and downlink can allocate resources independently. The uplink and downlink in the TDD system transmit data based on the same frequency but at different timings to stagger transmission and reception at different times. Compared with FDD systems, TDD systems do not require paired frequencies and can be easily configured in scattered frequency bands that are not easily used by FDD systems, which can effectively improve spectrum utilization. Meanwhile, the TDD system can also flexibly configure the uplink and downlink ratio of frames according to service types to meet the uplink and downlink data transmission requirements in the system.

In particular, seven types of frame structures are predefined in the Long Term Evolution (LTE) TDD system, and the uplink and downlink matching frame structures can be completely customized in the New Radio (NR) TDD system. Therefore, even if there are differences in user service behavior and distribution in different cells, the frame structure of each cell can still be flexibly adjusted based on actual business requirements.

However, after adjusting the frame structure of each cell to the desired frame structure, the frame structures adopted by the cells are different, which in turn leads to cross-slot interference, that is, the interference of the uplink transmission data of the neighboring cells to the downlink reception of the serving cell, and the interference of the downlink transmission data of the neighboring cells to the uplink reception of the serving cell. Ultimately, the service performance of the cell is seriously deteriorated.

## SUMMARY

The main objective of embodiments of the present application is to provide a method and an apparatus for adjusting a frame structure, an electronic device, and a storage medium, which aims to adjust the frame structure without causing cross-slot interference, so that the frame structure of each cell can be flexibly adjusted without being restricted by cross-slot interference.

In order to achieve the above objective, embodiments of the present application provide a method for adjusting a frame structure, including: obtaining a correlation degree of the frame structure among each of target cells, where the correlation degree of the frame structure includes information representing mutual relation and/or frame structure requirements of each of the target cells; clustering the target cells according to the correlation degree of the frame structure to obtain several cell clusters; and determining a frame structure corresponding to each cell cluster according to uplink load information and downlink load information of the target cells in the cell cluster, to adjust a frame structure of each of the target cells in the cell cluster according to the frame structure corresponding to each cell cluster.

In order to achieve the above objective, embodiments of the present application further provide a method for adjusting a frame structure, including: receiving an instruction for adjusting the frame structure, the instruction for adjusting the frame structure carries the frame structure corresponding to each cell cluster generated by the method for adjust the frame structure as described above; and adjusting the frame structure of each of the target cells in the cell cluster to the frame structure corresponding to the cell cluster.

In order to achieve the above objective, embodiments of the present application further provide an apparatus for adjusting a frame structure, including: an obtaining module, configured for obtaining a correlation degree of the frame structure among each of target cells, the correlation degree of the frame structure includes information representing mutual relation and/or frame structure requirements of each of the target cells; a cell cluster dividing module, configured for clustering the target cells according to the correlation degree of the frame structure to obtain several cell clusters; and a frame structure determining module, configured for determining the frame structure corresponding to each cell cluster according to uplink load information and downlink load information of the target cells in the cell cluster, to adjust the frame structure of each of the target cells in the cell cluster according to the frame structure.

In order to achieve the above objective, embodiments of the present application further provide an apparatus for adjusting a frame structure, including: a receiving module, configured for receiving an instruction for adjusting the frame structure, the instruction for adjusting the frame structure carries the frame structure corresponding to each cell cluster generated by the method for adjust the frame structure as described above; and an adjusting module, configured for adjusting the frame structure of each of the target cells in the cell cluster to the frame structure corresponding to the cell cluster.

In order to achieve the above objective, embodiments of the present application further provide an electronic device, including: at least one processor; and a memory communicated with the at least one processor, the memory stores instructions executable by the at least one processor, and when the instructions are executed by the at least one processor, the at least one processor performs the method for adjusting the frame structure as described above.

In order to achieve the above objective, embodiments of the present application further provide a computer-readable storage medium storing a computer program, when the computer program is executed by a processor, the method for adjusting the frame structure as described above is performed.

## BRIEF DESCRIPTION OF THE DRAWINGS

One or more embodiments are exemplified by the pictures in the corresponding drawings, and these exemplary illustrations do not constitute limitations to the embodiments.

FIG. 1 is a flowchart of a method for adjusting a frame structure according to an embodiment of the present application.

FIG. 2 is a schematic diagram of a relative position of a base station and a cell according to another embodiment of the present application.

FIG. 3 is a flowchart of the method for adjusting the frame structure according to another embodiment of the present application.

FIG. 4 is an application scenario diagram of the method for adjusting the frame structure according to another embodiment of the present application.

FIG. 5 is a schematic structural diagram of a topology diagram according to another embodiment of the present application.

FIG. 6 is a schematic diagram of clustering results according to another embodiment of the present application.

FIG. 7 is a schematic structural diagram of an apparatus for adjusting a frame structure according to another embodiment of the present application.

FIG. 8 is a schematic structural diagram of the apparatus for adjusting the frame structure according to another embodiment of the present application.

FIG. 9 is a schematic structural diagram of an electronic device according to another embodiment of the present application.

## DETAILED DESCRIPTION OF THE EMBODIMENTS

It can be known from the background that although adjusting the frame structure can meet the service requirements of each cell, it will always cause cross-slot interference.

In order to solve the above problem, embodiments of the present application provide a method for adjusting a frame structure, including: obtaining a correlation degree of the frame structure among each of target cells, the correlation degree of the frame structure includes information representing mutual relation and/or frame structure requirements of each of the target cells; clustering the target cells according to the correlation degree of the frame structure to obtain several cell clusters; and determining the frame structure corresponding to each cell cluster according to uplink load information and downlink load information of the target cells in the cell cluster, to adjust the frame structure of each of the target cells in the cell cluster according to the frame structure.

Embodiments of the present application provide a method for adjusting a frame structure. After obtaining the correlation degree of the frame structure including information representing the mutual relation and/or frame structure requirements of each of the target cells, the target cells are clustered according to the correlation degree of the frame structure. That is, the target cells are clustered according to the mutual relation and/or frame structure requirements among each of the target cells to obtain cell clusters. Thus, target cells with large mutual relation and/or similar frame structure requirements are clustered into the same cell cluster, and target cells with small mutual relation and/or inconsistent frame structure requirements are clustered into different cell clusters. Therefore, the frame structure corresponding to each cell cluster is determined based on the uplink load information and the downlink load information of the target cell in the cell cluster, to adjust the frame structure for each target cell in the cell cluster according to the frame structure, such that the frame structure is determined and adjusted based on the cell cluster, and the target cells in different cells can be configured with different frame structures to meet their own frame structure requirements as much as possible. Target cells in the same cell cluster are configured with the same frame structure, that is, the uplink switching point and downlink switching point in the frame are the same, thus avoiding cross-slot interference between these target cells.

In order to make the purpose, technical solutions and advantages of the embodiments of the present application clearer, each embodiment of the present application will be described in detail below with reference to the accompanying drawings. However, those of ordinary skill in the art can understand that in each embodiment of the present application, many technical details are provided to enable readers to better understand the present application. However, even without these technical details and various changes and modifications based on the following embodiments, the technical solution claimed in the present application can also be implemented. The following clustering of the various embodiments is for convenience of description and should not constitute any limitation on the specific implementation of the present application. The various embodiments can be combined with each other and referred to each other on the premise that there is no contradiction.

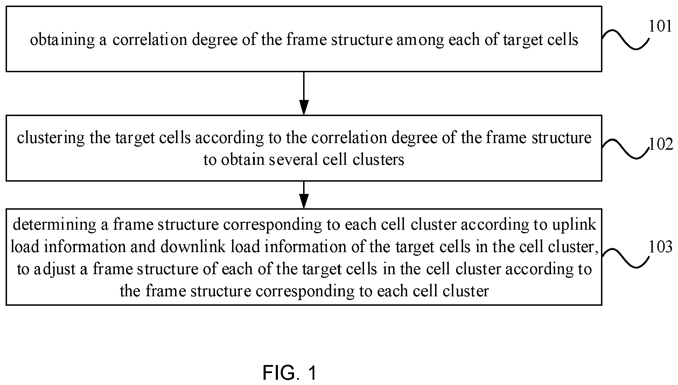

One aspect of the embodiments of the present application provides a method for adjusting a frame structure, applied to a server deployed with Mobile Edge Computing (MEC), a server deployed with network management software, a computer and other electronic equipment, in particular, the method can be applied to a control device in a base station to control the base station to adjust the frame structure of a cell. As shown in FIG. 1, the method specifically includes: Step 101, obtaining a correlation degree of the frame structure among each of target cells.

In this embodiment, the correlation degree of the frame structure includes information representing mutual relation and/or frame structure requirements of each of the target cells. In some examples, the correlation degree of the frame structure includes at least one or a combination of the following: distance degree, mutual degree, cross-slot interference degree, and frame structure similarity. The distance degree is configured to evaluate the distance between each target cell. The mutual degree is configured to evaluate the frequency of business interactions between a cell and neighboring cells. The frame structure similarity between each cell is configured to evaluate the similarity of the uplink and downlink switching point positions in the frame structure. The cross-slot interference information represents the degree of cross-slot interference currently suffered by the cell.

In order to facilitate those skilled in the art to better understand the content of obtaining the correlation degree of the frame structure, the following will take the acquisition of the distance degree, the mutual degree, the cross-slot interference degree and the frame structure similarity as examples for description. It should be noted that in other examples, the distance degree and the cross-slot interference degree can also be obtained simultaneously and the weighted sum of the distance degree and the cross-slot interference degree can be used as the final correlation degree of the frame structure. Or, the distance degree, the mutual degree, the cross-slot interference degree and the frame structure similarity are simultaneously obtained, and the weighted sum of the distance degree, the mutual degree, the cross-slot interference degree and the frame structure similarity is used as the final correlation degree of the frame structure, or the like, which will be not repeated herein.

When the correlation degree of the frame structure is the distance degree, the obtaining the correlation degree of the frame structure among each of the target cells can be realized through the following methods: obtaining geographical location information of each of the target cells, where the geographical location information of the base station can come from the network planning information in the preset area.; determining a physical distance among each of the target cells according to the geographical location information; and determining the distance degree according to the physical distance among each of the target cells.

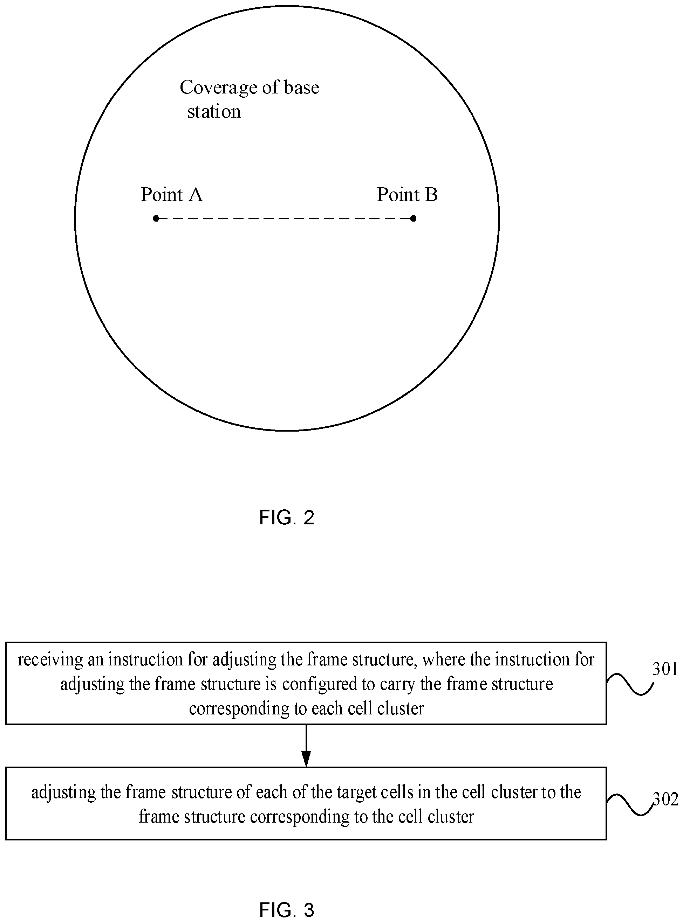

In some examples, obtaining the geographical location information of each target cell is mainly based on the geographical location relationship of the base station corresponding to the target cell, specifically, obtaining the work parameter information of the base station corresponding to the target cell, and determining the longitude and latitude of each target cell based on the longitude and latitude of the base station and the azimuth angle of the base station in the work parameter information, that is, the geographical location information, where the azimuth angle of the base station is actually the azimuth angle of the cell relative to the base station. More specifically, the work parameter information of the base station corresponding to the target cell and the forward coverage distance of the target cell are obtained. According to the longitude and latitude of the base station and the azimuth angle of the base station in the work parameter information and the forward coverage distance of the target cell, the longitude and latitude of each target cell, that is, the geographical location information is determined. The meaning of forward coverage distance is: as shown in FIG. 2, point A is the location indicated by the longitude and latitude of the base station determined based on the work parameter information, and point B is the position indicated by the longitude and latitude of a cell covered by the base station determined based on the forward coverage distance of the cell, the longitude, latitude and azimuth of the cell. The distance between point A and point B is related to the forward coverage distance of the cell, the forward coverage distance of a cell is obtained based on the positional relationship between the cell and neighboring cells in the network planning. For example, the forward coverage range is obtained by taking the average distance of multiple cells closest to the cell within the direction angle range of the cell.

In some examples, since for cells belonging to the same base station, the longitude and latitude obtained from the work parameter information are the same, but in fact the coverage direction characteristics of each cell are different. Therefore, when determining distances that are suitable for each cell and are not completely consistent with each other, only the work parameter information cannot be used. Therefore, determining the distance degree based on the physical distance between each target cell can be determined in the following way: determining the distance based on the physical distance between each target cell and a first preset constraint relationship, where the first constraint relationship includes the following expression:

$$\text{disDegree}_{i,\ j} = 1 - \text{distance}_{i,\ j}/\text{baseDis}_i$$

where $\text{disDegree}_{i,j}$ is a distance degree between i-th target cell and j-th target cell, $\text{distance}_{i,j}$ is a physical distance between the i-th target cell and the j-th target cell, and $\text{baseDis}_i$ is an inter-cell coverage reference distance of the i-th target cell determined based on the physical distance between the i-th target cell and other target cells. For example, $\text{baseDis}_i$ is the average, weighted average, etc. of the distances between the i-th target cell and other target cells.

It can be understood that the distance degree between two target cells determined according to the first constraint relationship is negatively correlated with the physical distance between the two target cells. That is, the closer the physical distance between two target cells is, the greater the distance degree between the two target cells is. The farther the physical distance between two target cells is, the smaller the distance degree between the two target cells is.

The above is only a specific example. In other examples, the first constraint relationship can also be the distance degree between the i-th target cell and the j-th target cell. $\text{disDegree}_{i,\ j} = K/\text{distance}_{i,\ j}$. $\text{distance}_{i,j}$ is the physical distance between the i-th target cell and the j-th target cell, etc., which will not be repeated herein.

It should be noted that the physical distance between target cells can also be data recorded during network deployment. When the frame structure needs to be adjusted, the user can upload it independently, etc. Alternatively, the cell location is determined based on the MR, Timing Advance (TA) and other information reported by the terminals in the cell, and then the distance degree between each cell is determined based on the cell location, which will not be repeated herein.

When the correlation degree of the frame structure is the mutual degree, the obtaining the correlation degree of the frame structure among each of the target cells can be realized through the following methods: obtaining cell handover information of each of the target cells within a second preset period, where the cell handover information is the information handover from one cell to another cell, which can be determined based on the handover relationship between the cells or the measurement report (MR); and determining the mutual degree among each of the target cells according to the cell handover information of each of the target cells.

In some example, the determining the mutual degree among each of the target cells according to the cell handover information of each of the target cells can be realized through the following methods: determining a number of handover occurrences among each of the target cells according to the cell handover information of each of the target cells; and determining the mutual degree according to the number of handover occurrences among each of the target cells and a second preset constraint relationship, where the second preset constraint relationship includes the following expression:

$$\text{Mutual}_{i,j} = \left( \frac{\text{HoTime}_{i,j}}{\sum_{m=1}^{M-1} \text{HoTime}_{i,m}} + \frac{\text{HoTime}_{i,j}}{\sum_{m=1}^{M-1} \text{HoTime}_{m,j}} \right) / 2$$

where $\text{Mutual}_{i,j}$ is the mutual degree between i-th target cell and j-th target cell, $\text{HoTime}_{i,j}$ is the number of handover occurrences between the i-th target cell and the j-th target cell within the second preset period, and M is a total number of the target cells.

In another examples, the mutual degree can also be determined according to the following expression:

$$Mutual_{i,j} = \frac{HoTime_{i,j}}{\sum_{m=1,\ j=1}^{m=M-1,\ j=M-1} HoTime_{m,j}}$$

where $Mutual_{i,j}$ is the mutual degree between i-th target cell and j-th target cell, $HoTime_{i,j}$ is the number of handover occurrences between the i-th target cell and the j-th target cell within the second preset period, and M is a total number of the target cells.

The above are only specific examples of how to determine the mutual degree. In other examples, other expressions or processing methods can be used to achieve this, which will not be repeated herein.

When the correlation degree of the frame structure is the frame structure similarity, it can be understood that, this embodiment mainly solves the problem of cross-slot interference between cells due to different uplink switching point and downlink switching point in the frame. After analysis, it was found that when adjusting the frame structure, the uplink switching point and downlink switching point are different due to the different uplink and downlink load requirements. Therefore, in this embodiment, the main focus is on the impact of uplink and downlink loads on the frame structure. Thus, the obtaining the correlation degree of the frame structure between each target cell can be realized through the following methods: obtaining the uplink load information and the downlink load information of each target cell within the first preset period, where the uplink load information and the downlink load information refer to information that measures uplink transmission data amount and downlink transmission data amount, which can be uplink throughput and downlink throughput, uplink transmission rate and downlink transmission rate, or uplink physical resource block utilization (PRB) and downlink PRB utilization, etc. In particular, for NR systems, the uplink load information and downlink load information can include the uplink load information and the downlink load information of each beam, where the cell handover information and uplink load information and downlink load information are obtained from key performance indicators (KPI); dividing the uplink load information and the downlink load information within the first preset period according to the preset time granularity to obtain the uplink load information and the downlink load information of each target cell in different time segments; based on the uplink load information and the downlink load information in different time segments, determining a ratio of uplink load to downlink load of each target cell in different time segments; determining the frame structure corresponding to different time segments based on the ratio of uplink load to downlink load in different time segments, and obtaining the frame structure sequence of each target cell, where the frame structure sequence is a sequence composed of frame structures corresponding to different time segments within the first preset period; and determining the frame structure similarity between each target cell according to the frame structure sequence. The duration of a period is a time granularity. For example, the first preset period is 30 days and the time granularity is hours. It can be divided into 30*24=720 periods, the duration of each period is one hour. It should be noted that this embodiment does not limit the duration and time granularity of the first preset period. The time granularity can be days, hours, minutes, seconds, etc., and the first preset period can be a quarter, a month, a week, etc. However, when dividing the first preset period according to time granularity, it is necessary to obtain a number of periods that are sufficient to reflect the characteristics of dynamic changes in cell frame structure requirements as time changes.

The first preset period can also be divided to obtain several third preset periods. Then, each third preset period is divided according to time granularity, and the ratio of uplink load to downlink load sequence corresponding to each third preset period is determined. Then, the average of the ratio of uplink load to downlink load of several corresponding periods of the third preset period is calculated to obtain the final ratio of uplink load to downlink load used to determine the frame structure sequence. For example, if the first preset period is 30 days, divide it into 30 days, and then determine the uplink and downlink throughput ratios for each hour of each day to obtain the daily uplink and downlink throughput ratio sequence, and the average of the uplink throughput ratios in the 0-1 hour periods of 30 days is calculated to obtain the final uplink and downlink throughput ratio sequence.

In some examples, the ratio of uplink load to downlink load within a period can be determined by the following expression:

$$ulDlRatio = ulThroughput/dlThroughput$$

ulDlRatio represents the ratio of uplink load to downlink load in a certain period, ulThroughput represents the uplink throughput in this period, and dlThroughput represents the downlink throughput in this period.

In some examples, determining the frame structure similarity between each target cell based on the frame structure sequence can be achieved in the following ways: clustering the target cells based on a centroid according to the frame structure sequence to obtain the centroid of each category; and using a centroid distance between categories to which each of the target cells belongs after the clustering as the frame structure similarity among each of the target cells. That is, the frame structure similarity between each target cell can be determined by the following expression:

$$\text{frmSmilarity}_{i,j} = 1 - \sqrt{\sum_{k=1}^{len} \left(\text{std}_{i,k} - \text{std}_{j,k}\right)^2}$$

frmSmilarity$_{i,j}$ is the frame structure similarity between the i-th target cell and the j-th target cell, std$_{i,k}$ is the k-th element of the centroid sequence std$_i$ of the category to which the frame structure sequence of the i-th target cell belongs, std$_{j,k}$ is the k-th element of the centroid sequence std$_j$ of the category to which the frame structure sequence of the j-th target cell belongs, len represents the total number of elements in the centroid sequence, that is, the total number of periods included in the first preset period. At this time, it can be found that the value range of the frame structure similarity is 0 to 1. For frames belonging to the same frame structure, the difference degree is 1; the greater the difference in frame structures, the smaller the similarity.

It should be noted that after determining the centroid, the frame structure similarity between the two target cells can also be determined based on the cosine distance between the centroids of the categories to which the frame structure sequence belongs, that is, the frame structure similarity can be determined through the following expression:

$$\text{frmSmilarity}_{i,j} = \left| \frac{\sum_{k=1}^{len} \left(\text{std}_{i,k} * \text{std}_{j,k}\right)}{\sqrt{\sum_{k=1}^{len} \text{std}_{i,k}^2} + \sqrt{\sum_{k=1}^{len} \text{std}_{j,k}^2}} \right|$$

frmSmilarity$_{i,j}$ is the frame structure similarity between the i-th target cell and the j-th target cell, std$_{i,k}$ is the k-th element of the centroid sequence std$_i$ of the category to which the frame structure sequence of the i-th target cell belongs, std$_{j,k}$ is the k-th element of the centroid sequence std$_j$ of the category to which the frame structure sequence of the j-th target cell belongs, len represents the total number of elements in the centroid sequence, that is, the total number of periods included in the first preset period.

In another cases, the frame structure similarity between each target cell is determined according to the frame structure sequence, and can also be determined by obtaining the cosine similarity between the frame structure sequences of the two target cells. That is, the frame structure similarity between each target cell can be determined through the following expression:

$$\text{frmSmilarity}_{i,j} = \left| \frac{\sum_{k=1}^{len} \left(d_{i,k} * d_{j,k}\right)}{\sqrt{\sum_{k=1}^{len} d_{i,k}^2} + \sqrt{\sum_{k=1}^{len} d_{j,k}^2}} \right|$$

frmSmilarity$_{i,j}$ is the frame structure similarity between the i-th target cell and the j-th target cell, d$_{i,k}$ is the k-th element of the frame structure sequence of the i-th target cell, d$_{j,k}$ is the k-th element of the frame structure sequence of the j-th target cell, len represents the total number of elements in the frame structure sequence, that is, the total number of periods included in the first preset period.

The above are only specific examples. In other examples, the frame structure similarity between each target cell can also be determined in other ways, which will be not repeated herein.

It is worth mentioning that the uplink and downlink load requirements of the target cell usually change dynamically, rather than being static, and the same cell has different uplink and downlink loads in different periods. Correspondingly, the required frame structure is also different. Therefore, it is more accurate to use a time series, that is, a sequence composed of the ratio of uplink load to downlink load of each period included in the first preset period, instead of one data, to dynamically describe the frame structure characteristics of each cell.

In another example, before determining the frame structures corresponding to different time segments according to the ratio of uplink load to downlink load in different time segments to obtain the frame structure sequence of each of the target cells, the method for adjusting the frame structure further includes: determining a frame structure candidate set based on actual needs and business characteristics, such as determining the frame structure candidate set {the first type of frame structure which is dominated by uplink, the second type of frame structure which is dominated by uplink, the first type of frame structure which is dominated by downlink, the second type of frame structure which is dominated by downlink, and the frame structure which is balanced between uplink and downlink}. Correspondingly, the determining the frame structures corresponding to different time segments according to the ratio of uplink load to downlink load in different time segments to obtain the frame structure sequence of each of the target cells can be realized through the following ways: matching the frame structures corresponding to different time segments from the frame structure candidate set according to the ratio of uplink load to downlink load in different time segments to obtain the frame structure sequence. For example, the sequence of the ratio of uplink load to downlink load of a certain cell is {1.3, 1.5, 3, 0.8, 0.5, 1, 1, 2.4}, it is predefined that when the ratio of uplink load to downlink load is greater than 1.2 and less than 2, the first type of frame which is dominated by uplink is used. When the ratio of uplink load to downlink load is greater than 2, the second type of frame which is dominated by uplink is used. When the ratio of uplink load to downlink load is greater than 0.9 and less than 0.95, the first type of frame which is dominated by downlink is used. When the ratio of uplink load to downlink load is less than 0.9, the second type of frame which is dominated by downlink is used. When the ratio of uplink load to downlink load is greater than 0.95 and less than 1.2, the frame which is balanced between uplink and downlink is used. Then the frame structure sequence of the cell is: {the first type of frame structure which is dominated by uplink, the first type of frame structure which is dominated by uplink, the second type of frame structure which is dominated by uplink, the second type of frame structure which is dominated by downlink, the second type of frame structure which is dominated by downlink, the frame structure which is balanced between uplink and downlink, the frame structure which is balanced uplink and downlink, the first type of frame structure which is dominated by uplink}.

It should be noted that the frame structure candidate set can also be a user-predefined frame structure set. In particular, the frame structures defined in the frame structure candidate set may be several frame structures selected according to the service characteristics of the current cell.

It is worth mentioning that providing a frame structure candidate set that meets the actual load requirements and business characteristics, and narrowing the operation of determining the frame structure from matching among several frame structures to matching from a frame structure candidate set reduces the amount of calculation, relieves processing pressure, and improves processing efficiency.

When the correlation degree of the frame structure is the cross-slot interference degree, the obtaining the correlation degree of the frame structure among each of the target cells can be achieved through the following ways: obtaining cross-slot interference information between the cells, where the cross-slot interference information can be represented by the proportion of PRBs affected by cross-slot interference, etc.; and determining the cross-slot interference degree according to the cross-slot interference information.

It should be noted that the above explanation is mainly based on the need to determine the mutual degree, the distance degree and the frame structure similarity between each two cells. In other examples, the mutual degree, the distance degree and the frame structure can also be obtained only between cells whose geographical distance is smaller than the preset distance value. It is understandable that interference and terminal handover between cells are more likely to occur between cells with a smaller geographical distance, which will not be repeated herein.

It should be further noted that when the method for adjusting the frame structure is applied to the control device in the base station, the base station involved in step 101 may be the base station to which the control device belongs, or it may be the base station to which the control device belongs and several base stations with which it has communication connections. When the method for adjusting the frame structure is applied to a peripheral device, the base station involved in step 101 may be one or more base stations managed by the peripheral device, which will not be repeated herein.

It is worth mentioning that when the correlation degree of frame structure includes frame structure similarity, and at least one of the distance degree, the mutual degree, and the cross-slot interference, after obtaining the correlation degree of the frame structure, the cells are clustered according to the correlation degree of the frame structure to obtain the cell cluster, such that cells that interfere greatly with each other and have similar frame structure requirements can be clustered into the same cell cluster, and cells that have little interference with each other and have inconsistent frame structure requirements can be clustered into different cell clusters. Thus, when determining and adjusting the frame structure in units of cell clusters, it can not only meet the needs of each cell for the frame structure, but also cause cells that interfere with each other, that is, cells in the same cell cluster, to be configured with the same frame structure, that is, frames with the same uplink switching point and downlink switching point in the frame, avoiding cross-slot interference between these cells, and also cause cells with inconsistent frame structure requirements, that is, cells in different cell clusters are allocated to different frame structures that meet their respective needs. The final implementation can adjust the frame structure of the cell according to actual needs without causing cross-slot interference.

Step 102, clustering the target cells according to the correlation degree of the frame structure to obtain several cell clusters.

This embodiment does not limit the specific method of clustering processing, which can be graph clustering, Density-Based Spatial Clustering of Applications with Noise (DBSCN), NQ-DBSCN, etc.

In order to facilitate those skilled in the art to better understand step 102, graph clustering will be used as an example for description below.

First, each target cell is regarded as a node in a topology graph, and an undirected edge is created between the two target nodes corresponding to the two target cells with a frame structure association relationship. Then, the correlation degree of the frame structure between the target cells is assigned to the corresponding edge as an edge weight, and then clustering is performed according to the graph clustering algorithm based on the topology graph to obtain several groups of cells, and a group of cells is a cell cluster.

It can be understood that when the mutual degree and the distance degree between the target cell and neighboring cells are low, interference caused by different frame structures will have little impact on the overall performance. When the mutual degree between the target cell and neighboring cells is high, the cross-slot interference caused by different frame structures will have a greater impact on performance. Therefore, it is expected that those with low mutual degree and distance degree will be divided into different cell clusters, so that different frame structures that meet their respective needs can be determined for different target cells as much as possible, and there will be no cross-slot interference. When the frame structure similarity between the target cell and other target cells is low, if they are divided into the same cell cluster and the same frame structure is determined, it cannot meet the needs of different target cells at the same time, and the differences are large. Therefore, it is expected to divide the frame structure similarity into different cell clusters. In other words, graph clustering aims at dividing nodes with small edge weights into different classes and dividing nodes with large edge weights into the same class.

It should also be noted that in the topology diagram described above, there is only one edge between the nodes corresponding to two target cells that have a frame structure association relationship. In other cases, it is possible to create edges between every two nodes. When edges are created only when there is a frame structure association, the topology graph is relatively simple, the processing volume is smaller, and the efficiency is higher. When an edge is created between every two cells, it will be more accurate to obtain cell clusters. The processing method can be selected according to actual needs, which will be not repeated herein.

Cell clusters can be determined multiple times to adapt to the current business conditions of each cell, better meet user needs, and improve user experience. In the process of determining cell clusters multiple times, if the correlation degree of the frame structure includes at least two of the distance degree, the mutual degree, the cross-slot interference degree and the frame structure similarity, that is, when it is necessary to use weighted summation to express the final correlation degree of frame structure, the weights used in the summation can also be continuously adjusted. That is, when the cell cluster is determined for the first time, the weight used in the summation is the preset value. When subsequently determining the cell cluster, the current cross-slot interference, service status, etc. can be detected. Then the weights are adjusted according to certain rules based on the detected results, for example, when updating through a greedy algorithm, when the cross-slot interference between target cells in different cell clusters exceeds a certain level and the service experience of the target cell becomes worse, such as throughput, scheduling rate, etc., the greedy algorithm is given negative incentives. When the cross-slot interference is lower than a certain level, the greedy algorithm is given positive incentives, the weights used in the summation will no longer be adjusted until the greedy algorithm converges or reaches the threshold of the number of adjustments.

It can be understood that the frame structure determined based on the above method may still need to be adjusted. Therefore, after determining the frame structure corresponding to each cell cluster according to the uplink load information and the downlink load information of the target cell in the cell cluster, the method for adjusting the frame structure further includes: obtaining current cross-slot interference information and current service performance data between the target cells; and in response to detecting that the cell cluster needs to be updated based on the current cross-slot interference information and the current service performance data, updating the cell cluster based on the current cross-slot interference information, so as to re-determine the frame structure corresponding to each cell cluster based on the updated cell cluster. Thus, real-time updates are achieved, making the determined frame structure more accurate and more in line with business needs.

Step 103, determining the frame structure corresponding to each cell cluster according to uplink load information and downlink load information of the target cells in the cell cluster, to adjust the frame structure of each of the target cells in the cell cluster according to the frame structure.

In this embodiment, when the control device inside the base station determines the frame structure corresponding to each cell cluster, it generates corresponding instructions through internal information exchange to notify the cell or terminal to adjust the frame structure. After the peripheral device determines the frame structure to be configured, it notifies the base station of the frame structure to be configured through a predefined communication interface with the base station, so that the base station can further adjust the frame structure.

It can be understood that after the frame structure to be configured is determined, the information of the target cell may change, causing the currently determined frame structure to no longer meet the business requirements. Therefore, after determining the frame structure corresponding to each cell cluster according to the uplink load information and the downlink load information of the target cell in the cell cluster, the method for adjusting the frame structure further includes: obtaining the uplink load information and the downlink load information and/or cell handover information of each of the target cells; and in response to detecting that a change amplitude of the uplink load information and the downlink load information and/or cell handover information of at least one of the target cells exceeds a preset threshold, updating the cell cluster according to the currently obtained uplink load information and downlink load information and/or cell handover information.

Another aspect of the embodiments of the present application provides a method for adjusting a frame structure, applied to a base station. As shown in FIG. 3, the method includes:

Step 301, receiving an instruction for adjusting the frame structure, where the instruction for adjusting the frame structure carries the frame structure corresponding to each cell cluster.

It should be noted that the frame structure corresponding to each cell cluster is obtained according to the method for adjusting the frame structure provided in the previous embodiment.

Step 302, adjusting the frame structure of each of the target cells in the cell cluster to the frame structure corresponding to the cell cluster.

In this embodiment, for the LTE system, after receiving the instruction for adjusting the frame structure, it is possible to trigger Radio Resource Control (RRC) reconfiguration of the air interface; for systems such as NR that can flexibly adjust the frame structure, the frame structure conversion can be achieved through dynamic data scheduling without the need for RRC reconfiguration of the air interface.

It can be understood that although cross-slot interference between cells can be detected through measurements by base stations and terminals, interference can be avoided or eliminated to a certain extent through scheduling mechanisms such as time domain, frequency domain, or beam domain, there may still be cross-slot interference, and the interference needs to be reported so that the frame structure can continue to be adjusted to meet business needs. Therefore, after adjusting the frame structure of each of the target cells in the cell cluster to the frame structure corresponding to the cell cluster, the method for adjusting the frame structure further includes: detecting cross-slot interference on each of the target cells; and in response to detecting the cross-slot interference, obtaining and reporting cross-slot interference information and service performance data.

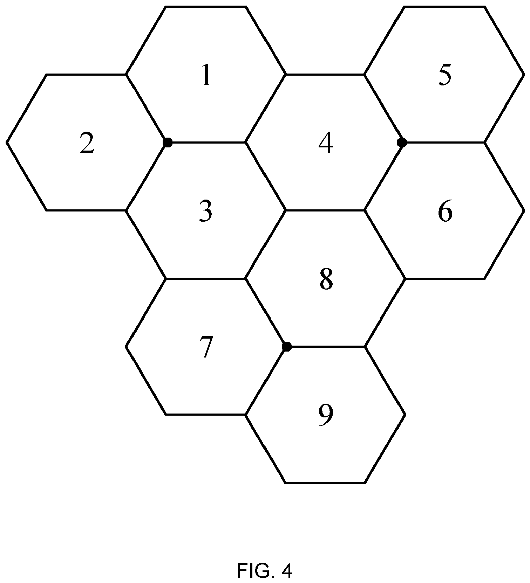

In order to facilitate those skilled in the art to better understand the method for adjusting the frame structure provided by the embodiments of the present application, the following will give an example of a scenario with 3 base stations and 9 cells in the peripheral management area as shown in FIG. 4. The hexagonal areas marked with serial numbers represent each cell, the serial numbers are the serial numbers of each cell, and the three black dots are the locations of the three base stations.

First, collect the latitude and longitude information of each base station, the azimuth information of the cell, the uplink throughput and downlink throughput in the past week, and the number of handover and handoff attempts of the terminal in the cell and its neighboring cells.

Then, based on the number of handover and handoff attempts within a week, the mutual degree between these 9 cells is determined, and only the mutual degree between cells with a higher mutual degree is retained, and the following table is obtained:

Table 1

|   | 1 | 2 | 3 | 4 | 5 | 6 | 7 | 8 | 9 |
|---|---|---|---|---|---|---|---|---|---|
| 1 |   | 0.457 | 0.115 | 0.093 |   |   |   |   |   |
| 2 | 0.457 |   | 0.208 |   |   |   | 0.119 |   |   |
| 3 | 0.115 | 0.208 |   |   |   |   | 0.440 |   |   |

(continued)

| | 1 | 2 | 3 | 4 | 5 | 6 | 7 | 8 | 9 |
|---|---|---|---|---|---|---|---|---|---|
| 4 | 0.093 | | | | 0.155 | | | 0.389 | |
| 5 | | | | 0.155 | | 0.363 | | | |
| 6 | | | | | 0.363 | | | 0.142 | 0.273 |
| 7 | | 0.119 | 0.440 | | | | | | 0.047 |
| 8 | | | | 0.389 | | 0.142 | | | 0.106 |
| 9 | | | | | | 0.273 | 0.047 | 0.106 | |

The first row and column of Table 1 respectively represent the serial numbers of the 9 cells shown in FIG. 4. The data in row i+1 and column j+1 represents the mutual degree between the i-th cell and the j-th cell. Both i and j are positive integers.

Based on the longitude and latitude information of each base station and the azimuth information of the cell, the distance degree between each cell is determined, and only the mutual degree between cells with a higher mutual degree is retained, and the following table is obtained:

Table 2

| | 1 | 2 | 3 | 4 | 5 | 6 | 7 | 8 | 9 |
|---|---|---|---|---|---|---|---|---|---|
| 1 | | 0.75 | 0.81 | 0.56 | | | | | |
| 2 | 0.75 | | 0.72 | | | | 0.55 | | |
| 3 | 0.81 | 0.72 | | | | | 0.65 | | |
| 4 | 0.56 | | | | 0.83 | | | 0.45 | |
| 5 | | | | 0.83 | | 0.24 | | | |
| 6 | | | | | 0.24 | | | 0.56 | 0.62 |
| 7 | | 0.55 | 0.65 | | | | | | 0.5 |
| 8 | | | | 0.45 | | 0.56 | | | 0.23 |
| 9 | | | | | | 0.62 | 0.5 | 0.23 | |

The first row and column of Table 2 respectively represent the serial numbers of the 9 cells shown in FIG. 4. The data in row u+1 and column v+1 represents the distance degree between the u-th cell and the v-th cell. Both u and v are positive integers.

For a cell, based on the uplink throughput and downlink throughput in the last week, the time window length 1 day is divided into 7 days. The average values of the uplink throughput and downlink throughput at 0-1 o'clock, 1-2 o'clock...23-24 o'clock every day are respectively calculated, to obtain 7 time series of ratio of uplink load to downlink load with hour as time granularity and length 24, then average the values at the first position of the 7 time series, average the values at the second position of the 7 time series... average the values of the 24th position of the 7 time series to obtain the final time series {ulDIRatio0, ulDIRatio1...ulDIRatio23}.

After obtaining the time series of 9 cells, based on the preset frame structure candidate set {frame structure which is dominated by downlink, frame structure which is balanced between uplink and downlink, frame structure which is dominated by uplink} and the preset mapping relationship from the ratio of uplink load to downlink load to the frame structure as shown in the following table, 9 frame structure sequences {frame0, frame1, frame2...frame23} are obtained:

Table 3

| | uplink throughput/downlink throughput |
|---|---|
| frame structure which is dominated by downlink | ulDIRatio <preset threshold 1 |
| frame structure which is balanced between uplink and downlink | preset threshold 1< ulDIRatio < preset threshold 2 |
| frame structure which is dominated by uplink | ulDIRatio > preset threshold 2 |

The first row of Table 3 represents the various frame structures in the frame structure candidate set, and the second row represents the mapping conditions. The second row is taken as an example, when the ratio of uplink load to downlink load ulDlRatio in a certain period satisfies the condition ulDlRatio being less than the preset threshold 1, the frame structure matched by it is the frame structure which is dominated by downlink.

Then the obtained 9 frame structure sequences are processed according to the k-means clustering algorithm (K-Means) and are determined to be divided into two types: the first type of cells includes cells 1, 2, 3, 7, and 8, and the second type of cells includes cells 4, 5, 6, and 9. At this time, it is determined that the similarity between the two types of cells is 0.58, that is, the frame structure similarity between any two cells of different types is 0.58, the frame structure similarity between similar cells is 1, that is, the frame structure similarity between any two cells is determined.

At this time, it is assumed that the cross-slot interference is 0, then when the weight of the preset distance degree is 0.1, the weight of the mutual degree is 0.3, the weight of the frame structure similarity is 0.3, and the weight of the cross-slot interference is 0.3, the mutual degree between each cell is shown in the following table:

Table 4

|   | 1 | 2 | 3 | 4 | 5 | 6 | 7 | 8 | 9 |
|---|---|---|---|---|---|---|---|---|---|
| 1 |   | 0.570 7 | 0.554 5 | 0.393 3 |   |   |   |   |   |
| 2 | 0.570 7 |   | 0.536 8 |   |   |   | 0.476 9 |   |   |
| 3 | 0.554 5 | 0.536 8 |   |   |   |   | 0.539 |   |   |
| 4 | 0.393 3 |   |   |   | 0.564 5 |   |   | 0.389 9 |   |
| 5 |   |   |   | 0.564 5 |   | 0.408 3 |   |   |   |
| 6 |   |   |   |   | 0.408 3 |   |   | 0.398 2 | 0.513 3 |
| 7 |   | 0.476 9 | 0.539 |   |   |   |   |   | 0.370 7 |
| 8 |   |   |   | 0.389 9 |   | 0.398 2 |   |   | 0.295 6 |
| 9 |   |   |   |   |   | 0.513 3 | 0.370 7 | 0.295 6 |   |

The first row and column of Table 4 respectively represent the serial numbers of the 9 cells shown in FIG. 4. The data in row s+1 and column t+1 represents the weight sum between the s-th cell and the t-th cell, and s and t are both positive integers.

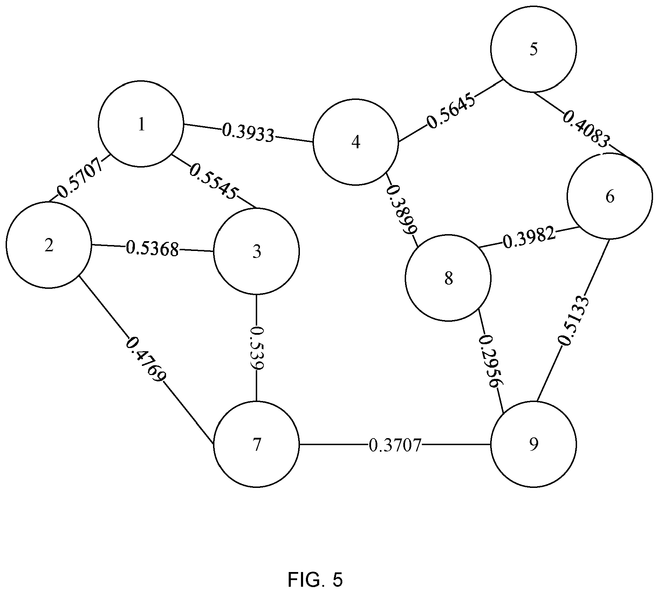

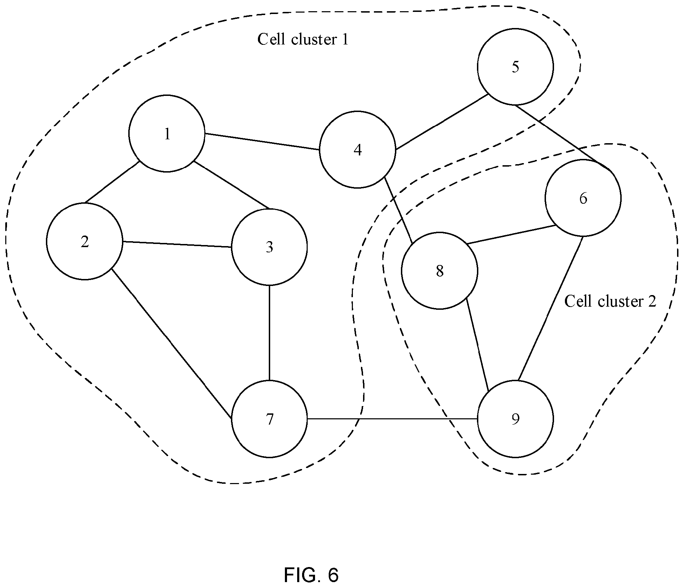

Then, based on the weight sum shown in Table 4, the topology diagram shown in FIG. 5 can be obtained. Then based on the graph clustering algorithm, the topology graph shown in FIG. 5 is processed to obtain the cell cluster diagram shown in FIG. 6. Cell cluster 1 includes cells 1, 2, 3, 5, 6, and 7, and cell cluster 2 includes cells 4, 8, and 9.

Then, based on the overall uplink and downlink load conditions of cells 1, 2, 3, 5, 6, and 7 and the mapping relationship shown in Table 3, it is determined that cell cluster 1 needs to select the frame structure which is dominated by downlink from the frame structure candidate set, and cell cluster 2 needs to select the frame structure which is balanced between uplink and downlink from the frame structure candidate set.

Based on the above results, a corresponding instruction for adjusting the frame structure is generated and sent to the base station. After receiving the instruction for adjusting the frame structure, the base station changes the uplink and downlink frame structure ratio.

In addition, it should be understood that the steps of the various methods above are clustered for clarity of description only. During implementation, it can be combined into one step or some steps can be split into multiple steps. As long as they include the same logical relationship, they are all within the scope of the present application. Adding insignificant modifications or introducing insignificant designs to the algorithm or process without changing the core design of the algorithm and process are within the scope of the present application.

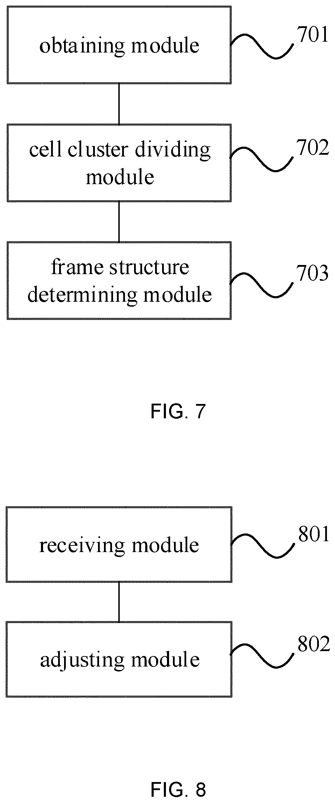

Another aspect of the embodiments of the present application further provides an apparatus for adjusting a frame structure, as shown in FIG. 7, including: an obtaining module 701, a cell cluster dividing module 702, and a frame structure determining module 703.

The obtaining module 701 is configured for obtaining a correlation degree of the frame structure among each of target cells.

The cell cluster dividing module 702 is configured for clustering the target cells according to the correlation degree of the frame structure to obtain several cell clusters.

The frame structure determining module 703 is configured for determining the frame structure corresponding to each cell cluster according to uplink load information and downlink load information of the target cells in the cell cluster, to adjust the frame structure of each of the target cells in the cell cluster according to the frame structure.

It is not difficult to find that this embodiment is an apparatus embodiment corresponding to the first method embodiment, and this embodiment can be implemented in cooperation with the first method embodiment. The relevant technical details mentioned in the first method embodiment are still valid in this embodiment. In order to reduce duplication, they will not be described again here. Correspondingly, the relevant technical details mentioned in this embodiment can also be applied to the first method embodiment.

It is worth mentioning that each module involved in this embodiment is a logical module. In actual applications, a logical unit can be a physical unit, or a part of a physical unit, or it can be implemented as a combination of multiple physical units. In addition, in order to highlight the innovative part of the present application, units that are not closely related to solving the technical problems raised in the present application are not introduced in this embodiment, but this does not mean that other units do not exist in this embodiment.

Another aspect of the embodiments of the present application further provides an apparatus for adjusting a frame structure, as shown in FIG. 8, including: a receiving module 801 and an adjusting module 802.

The receiving module 801 is configured for receiving an instruction for adjusting the frame structure, and the instruction for adjusting the frame structure carries the frame structure corresponding to each cell cluster.

The adjusting module 802 is configured for adjusting the frame structure of each of the target cells in the cell cluster to the frame structure corresponding to the cell cluster.

It is not difficult to find that this embodiment is an apparatus embodiment corresponding to the second method embodiment, and this embodiment can be implemented in cooperation with the second method embodiment. The relevant technical details mentioned in the second method embodiment are still valid in this embodiment. In order to reduce duplication, they will not be described again here. Correspondingly, the relevant technical details mentioned in this embodiment can also be applied to the second method embodiment.

It is worth mentioning that each module involved in this embodiment is a logical module. In actual applications, a logical unit can be a physical unit, or a part of a physical unit, or it can be implemented as a combination of multiple physical units.

In addition, in order to highlight the innovative part of the present application, units that are not closely related to solving the technical problems raised in the present application are not introduced in this embodiment, but this does not mean that other units do not exist in this embodiment.

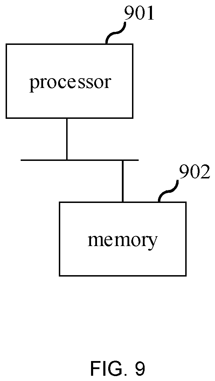

Another aspect of the embodiments of the present application further provides an electronic device, as shown in FIG. 9, including: at least one processor 901 and a memory 902 communicated with the at least one processor 901. The memory 902 stores instructions executable by the at least one processor 901, and when the instructions are executed by the at least one processor 901, the at least one processor 901 can perform the method for adjusting the frame structure as described in any one of the method embodiments.

The memory 902 and the processor 901 are connected using a bus. The bus can include any number of interconnected buses and bridges, the bus connects the various circuits of one or more processors 901 and memory 902 together. The bus may also connect various other circuits together such as peripherals, voltage regulators, and power management circuits, which are all well known in the art and therefore will not be described further herein. The bus interface provides the interface between the bus and the transceiver. A transceiver may be one element or may be multiple elements, such as multiple receivers and transmitters, providing a unit for communicating with various other devices over a transmission medium. The data processed by the processor 901 is transmitted on the wireless medium through the antenna. Furthermore, the antenna also receives the data and transmits the data to the processor 901.

The processor 901 is responsible for managing the bus and general processing, and can also provide various functions, including timing, peripheral interfaces, voltage regulation, power management, and other control functions. The memory 902 may be used to store data used by the processor 901 when performing operations.

Another aspect of the embodiments of the present application also provides a computer-readable storage medium storing a computer program. The above method embodiments are implemented when the computer program is executed by the processor.

That is, those skilled in the art can understand that all or part of the steps in implementing the methods of the above embodiments can be completed by instructing relevant hardware through programs. The program is stored in a storage medium and includes a number of instructions to cause a device (which can be a microcontroller, a chip, etc.) or a processor to execute all or part of the steps of the methods described in various embodiments of the present application. The aforementioned storage medium includes: U disk, mobile hard disk, read-only memory (ROM), random access memory (RAM), magnetic disk or optical disk and other media that can store program codes.

Those of ordinary skill in the art can understand that the above embodiments are specific embodiments for implementing the present application. In practical applications, various changes can be made in form and details without departing from the scope of the present application.

**Claims**

1.  A method for adjusting a frame structure, **characterized by** comprising:

    obtaining a correlation degree of the frame structure among each of target cells, wherein the correlation degree of the frame structure comprises information representing mutual relation and/or frame structure requirements of each of the target cells;
    clustering the target cells according to the correlation degree of the frame structure to obtain several cell clusters; and
    determining a frame structure corresponding to each cell cluster according to uplink load information and downlink load information of the target cells in the cell cluster, to adjust a frame structure of each of the target cells in the cell cluster according to the frame structure corresponding to each cell cluster.

2.  The method for adjusting the frame structure according to claim 1, wherein the correlation degree of the frame structure comprises at least one or a combination of the following: distance degree, mutual degree, cross-slot interference degree, and frame structure similarity.

3.  The method for adjusting the frame structure according to claim 2, wherein in response to that the correlation degree of the frame structure is the cross-slot interference degree, the obtaining the correlation degree of the frame structure among each of the target cells comprises:

    obtaining cross-slot interference information between the target cells; and
    determining the cross-slot interference degree according to the cross-slot interference information.

4.  The method for adjusting the frame structure according to claim 2, wherein in response to that the correlation degree of the frame structure is the distance degree, the obtaining the correlation degree of the frame structure among each of the target cells comprises:

    obtaining geographical location information of each of the target cells;
    determining a physical distance among each of the target cells according to the geographical location information; and
    determining the distance degree according to the physical distance among each of the target cells.

5.  The method for adjusting the frame structure according to claim 4, wherein the determining the distance degree according to the physical distance among each of the target cells comprises:

    determining the distance degree according to the physical distance among each of the target cells and a first preset constraint relationship, wherein the first preset constraint relationship comprises the following expression:

    $$\text{disDegree}_{i,\ j} = 1 - \text{distance}_{i,\ j}/\text{baseDis}_i$$

    wherein $\text{disDegree}_{i,\ j}$ is a distance degree between i-th target cell and j-th target cell, $\text{distance}_{i,j}$ is a physical distance between the i-th target cell and the j-th target cell, and $\text{baseDis}_i$ is an inter-cell coverage reference distance of the i-th target cell determined based on the physical distance between the i-th target cell and other target cells.

6.  The method for adjusting the frame structure according to claim 2, wherein in response to that the correlation degree of the frame structure is the frame structure similarity, the obtaining the correlation degree of the frame structure among each of the target cells comprises:

    obtaining uplink load information and downlink load information of each of the target cells within a first preset period;
    dividing the uplink load information and the downlink load information within the first preset period according to a preset time granularity to obtain uplink load information and downlink load information of each of the target cells in different time segments;
    determining a ratio of uplink load to downlink load of each of the target cells in different time segments according to the uplink load information and the downlink load information in different time segments;

determining the frame structures corresponding to different time segments according to the ratio of uplink load to downlink load in different time segments to obtain a frame structure sequence of each of the target cells, wherein the frame structure sequence is a sequence composed of frame structures corresponding to the different time segments within the first preset period; and

determining the frame structure similarity among each of the target cells according to the frame structure sequence.

7. The method for adjusting the frame structure according to claim 6, wherein before determining the frame structures corresponding to different time segments according to the ratio of uplink load to downlink load in different time segments to obtain the frame structure sequence of each of the target cells, the method further comprises:

determining a frame structure candidate set based on actual needs and business characteristics;
the determining the frame structures corresponding to different time segments according to the ratio of uplink load to downlink load in different time segments to obtain the frame structure sequence of each of the target cells comprises:
matching the frame structures corresponding to different time segments from the frame structure candidate set according to the ratio of uplink load to downlink load in different time segments to obtain the frame structure sequence.

8. The method for adjusting the frame structure according to claim 6, wherein the determining the frame structure similarity among each of the target cells according to the frame structure sequence comprises:

clustering the target cells based on a centroid according to the frame structure sequence; and
using a centroid distance between categories to which each of the target cells belongs after the clustering as the frame structure similarity among each of the target cells.

9. The method for adjusting the frame structure according to claim 2, wherein in response to that the correlation degree of the frame structure is the mutual degree, the obtaining the correlation degree of the frame structure among each of the target cells comprises:

obtaining cell handover information of each of the target cells within a second preset period; and
determining the mutual degree among each of the target cells according to the cell handover information of each of the target cells.

10. The method for adjusting the frame structure according to claim 9, wherein the determining the mutual degree among each of the target cells according to the cell handover information of each of the target cells comprises:

determining a number of handover occurrences among each of the target cells according to the cell handover information of each of the target cells; and
determining the mutual degree according to the number of handover occurrences among each of the target cells and a second preset constraint relationship, wherein the second preset constraint relationship comprises the following expression:

$$\mathrm{Mutual}_{i,j} = \left( \frac{\mathrm{HoTime}_{i,j}}{\sum_{m=1}^{M-1} \mathrm{HoTime}_{i,m}} + \frac{\mathrm{HoTime}_{i,j}}{\sum_{m=1}^{M-1} \mathrm{HoTime}_{m,j}} \right) / 2$$

wherein $\mathrm{Mutual}_{i,j}$ is the mutual degree between i-th target cell and j-th target cell, $\mathrm{HoTime}_{i,j}$ is the number of handover occurrences between the i-th target cell and the j-th target cell within the second preset period, and M is a total number of the target cells.

11. The method for adjusting the frame structure according to any one of claims 1 to 10, wherein the clustering the target cells according to the correlation degree of the frame structure to obtain several cell clusters comprises:

generating a topology diagram according to the correlation degree of the frame structure between the target cells, wherein nodes in the topology diagram correspond to the target cells, edges in the topology graph correspond to a correlation relationship of the frame structure between the target cells, and edge weights in the topology graph correspond to the correlation degree of the frame structure between the target cells; and clustering the target cells based on the topology map to obtain several cell clusters.

12. The method for adjusting the frame structure according to any one of claims 1 to 10, wherein after determining the frame structure corresponding to each cell cluster according to the uplink load information and the downlink load information of the target cell in the cell cluster, the method further comprises:

obtaining current cross-slot interference information and current service performance data between the target cells; and
in response to detecting that the cell cluster needs to be updated based on the current cross-slot interference information and the current service performance data, updating the cell cluster based on the current cross-slot interference information.

13. The method for adjusting the frame structure according to any one of claims 1 to 10, wherein after determining the frame structure corresponding to each cell cluster according to the uplink load information and the downlink load information of the target cell in the cell cluster, the method further comprises:

obtaining the uplink load information and the downlink load information and/or cell handover information of each of the target cells; and
in response to detecting that a change amplitude of the uplink load information and the downlink load information and/or cell handover information of at least one of the target cells exceeds a preset threshold, updating the cell cluster according to the currently obtained uplink load information and downlink load information and/or cell handover information.

14. A method for adjusting a frame structure, **characterized by** comprising:

receiving an instruction for adjusting the frame structure, wherein the instruction for adjusting the frame structure is configured to carry the frame structure corresponding to each cell cluster generated by the method for adjust the frame structure according to any one of claims 1 to 13; and
adjusting the frame structure of each of the target cells in the cell cluster to the frame structure corresponding to the cell cluster.

15. The method for adjusting the frame structure according to claim 14, wherein after adjusting the frame structure of each of the target cells in the cell cluster to the frame structure corresponding to the cell cluster, the method further comprises:

detecting cross-slot interference on each of the target cells; and
in response to detecting the cross-slot interference, obtaining and reporting cross-slot interference information and service performance data.

16. An apparatus for adjusting a frame structure, **characterized by** comprising:

an obtaining module, configured for obtaining a correlation degree of the frame structure among each of target cells, wherein the correlation degree of the frame structure comprises information representing mutual relation and/or frame structure requirements of each of the target cells;
a cell cluster dividing module, configured for clustering the target cells according to the correlation degree of the frame structure to obtain several cell clusters; and
a frame structure determining module, configured for determining a frame structure corresponding to each cell cluster according to uplink load information and downlink load information of the target cells in the cell cluster, to adjust a frame structure of each of the target cells in the cell cluster according to the frame structure corresponding to each cell cluster.

17. An apparatus for adjusting a frame structure, **characterized by** comprising:

a receiving module, configured for receiving an instruction for adjusting the frame structure, wherein the instruction for adjusting the frame structure carries the frame structure corresponding to each cell cluster generated by the method for adjust the frame structure according to any one of claims 1 to 13; and
an adjusting module, configured for adjusting the frame structure of each of the target cells in the cell cluster to the frame structure corresponding to the cell cluster.

18. An electronic device, **characterized by** comprising:

at least one processor; and
a memory communicated with the at least one processor,
wherein the memory stores instructions executable by the at least one processor, and when the instructions are executed by the at least one processor, the at least one processor performs the method for adjusting the frame structure according to any one of claims 1 to 13, or performs the method for adjusting the frame structure according to claim 14 or 15.

19. A computer-readable storage medium storing a computer program, **characterized in that** when the computer program is executed by a processor, the method for adjusting the frame structure according to any one of claims 1 to 13 is performed, or the method for adjusting the frame structure according to claim 14 or 15 is performed.

obtaining a correlation degree of the frame structure among each of target cells  101

clustering the target cells according to the correlation degree of the frame structure to obtain several cell clusters  102

determining a frame structure corresponding to each cell cluster according to uplink load information and downlink load information of the target cells in the cell cluster, to adjust a frame structure of each of the target cells in the cell cluster according to the frame structure corresponding to each cell cluster  103

FIG. 1

Coverage of base
station

Point A                                   Point B
●  —  —  —  —  —  —  —  —  —  —  —  ●

FIG. 2

| receiving an instruction for adjusting the frame structure, where the instruction for adjusting the frame structure is configured to carry the frame structure corresponding to each cell cluster | 301 |
|---|---|

↓

| adjusting the frame structure of each of the target cells in the cell cluster to the frame structure corresponding to the cell cluster | 302 |
|---|---|

FIG. 3

FIG. 4

FIG. 5

FIG. 6

obtaining module ⟋701

cell cluster dividing module ⟋702

frame structure determining module ⟋703

FIG. 7

receiving module ⟋801

adjusting module ⟋802

FIG. 8

FIG. 9

## INTERNATIONAL SEARCH REPORT

| International application No. |
|---|
| **PCT/CN2022/142983** |

| A. CLASSIFICATION OF SUBJECT MATTER |
|---|
| H04W72/04(2023.01)i |
| According to International Patent Classification (IPC) or to both national classification and IPC |

| B. FIELDS SEARCHED |
|---|
| Minimum documentation searched (classification system followed by classification symbols) |
| IPC:H04W |
| Documentation searched other than minimum documentation to the extent that such documents are included in the fields searched |
| Electronic data base consulted during the international search (name of data base and, where practicable, search terms used) |
| CNABS, CNTXT, VEN, EPTXT, WOTXT, USTXT, CNKI, 3GPP: 帧, 时隙, 结构, 配置, 调整, 簇, 组, 集群, frame, slot, structure, configuration, adjust, cluster, group |

### C. DOCUMENTS CONSIDERED TO BE RELEVANT

| Category* | Citation of document, with indication, where appropriate, of the relevant passages | Relevant to claim No. |
|---|---|---|
| X | CN 110337113 A (NORTHWEST A&F UNIVERSITY) 15 October 2019 (2019-10-15) description, paragraphs [0072]-[0101] | 1-19 |
| X | CN 106385689 A (ZHUHAI MEIZU TECHNOLOGY CO., LTD.) 08 February 2017 (2017-02-08) description, paragraphs [0032]-[0040] | 1-19 |
| A | CN 102143570 A (CHEN RUIJIE) 03 August 2011 (2011-08-03) entire document | 1-19 |
| A | WO 2018045302 A1 (INTEL IP CORP.) 08 March 2018 (2018-03-08) entire document | 1-19 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 February 2023** | **10 March 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2022/142983**

| Patent document cited in search report | | | Publication date (day/month/year) | Patent family member(s) | | | Publication date (day/month/year) |
|---|---|---|---|---|---|---|---|
| CN | 110337113 | A | 15 October 2019 | CN | 110337113 | B | 21 June 2022 |
| CN | 106385689 | A | 08 February 2017 | None | | | |
| CN | 102143570 | A | 03 August 2011 | CN | 102143570 | B | 11 September 2013 |
| WO | 2018045302 | A1 | 08 March 2018 | None | | | |

Form PCT/ISA/210 (patent family annex) (July 2022)

**EP 4 447 584 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111657517